# EUROPEAN PATENT APPLICATION

(11) **EP 4 039 084 A1**
(43) Date of publication of application: **10.08.2022**
(21) Application number: 19954448.7
(22) Date of filing: 27.11.2019
(51) Int. Cl.: A01K 1/01

(54) **DEVICE FOR CLEANING AND EMPTYING FAECES**

(71) Applicant: Román Del Molino, Rafael, 08186 Lliçà de Munt Barcelona (ES)
(72) Inventor: Román Del Molino, Rafael, 08186 Lliçà de Munt Barcelona (ES)
(74) Representative: Espiell Gomez, Ignacio
(86) International application number: PCT/ES2019/000072
(87) International publication number: WO 2021/105523

(57) **Abstract**

The invention relates to a device comprising a mobile movable unit provided with a blade (1), the movement being generated by the action of the motor (5), wherein the blade (1) has a half-round shape and has a sanitising tube (8) placed inside the blade and along the length thereof, the sanitising tube (8) being provided with a series of perforations (8.1) along the length thereof, used to project jets of water that cause the faeces to fall into a channel or drain, the device having limit switches and photocells in front of and behind the mobile movable unit. The device allows faeces to be removed from an area by means of the blade and emptied into a channel or drain by means of water-projecting jets, in a programmable and automatic manner.

## Description

### OBJECT OF THE INVENTION

The object of this invention, as the title of the invention sets, is a device for cleaning and emptying faeces, on any type of paved surfaces, relating to any animal, either a pet or not.

Likewise, the object of this invention is a sanitization set in which the device is integrated for cleaning and emptying faeces, where the set comprises a channel or drain provided with a sink and a sanitization tube that possesses perforations to project a jet of water.

This invention is characterized by the special configuration and design of the device object of the invention so that a device easy to handle and effective for cleaning is obtained.

Therefore, this invention is within the field of the automatic devices for emptying and cleaning faeces on paved surfaces.

### BACKGROUND OF THE INVENTION

In the state-of-the art, devices are known for hand picking faeces, more or less simple, and that offer a sufficient hygiene for the user.

However, the said means are manual and do not prevent that, somehow, one has to be close to the faeces in addition that they do not proceed to cleaning the apparatus itself nor the pavement where the deposit occurred.

Therefore, the object of this invention is to overcome the said drawbacks of lack of sanitization of the floors and the requirement of manual handling, by developing a device as the one disclosed below and which essentially appears in the first claim.

### DESCRIPTION OF THE INVENTION

The object of this invention is a device for cleaning and emptying faeces on any type of paved surfaces, to be preferably by not limitedly used for pets.

It is specially designed for cleaning enclosed areas where such pets are located.

The device is arranged on the paved area to be cleaned, it comprises a mobile shovel, movable by the action of a motor, where the shovel has the same width as the area where it is located.

The motor is powered by a rechargeable battery through a charger and started by means of an on/off switch.

The movable mobile shovel is half-round shaped and is provided with a sanitizing tube arranged lengthwise along the shovel length and is provided with a series of holes to project a sanitizing liquid that, when projected, makes that the dragged faeces fall in a channel / drain and this way it is in addition proceeded to cleaning the dragging shovel.

Associated to the device for cleaning and emptying faeces there could be available a channel or drain that is provided with a second sanitizing tube that is arranged along the full width of the channel or drain and that possesses holes or perforations that project a jet of water pushing the faeces toward a sink.

The device possesses means for the control and safety of the travel that, among other means, could be end stroke sensors, also on the front it possesses a photocell that serves to detect possible hindrances and animals, in order to proceed to automatically stop the device.

In addition, and complementary to the device, it can possess a hose connected to a deposit for the storage of a sanitizing product that allows projecting the said product inside of the animal area.

The travels of the mobile unit can be previously programmed from a remote device such as, for example, a smart phone, in addition it is possible that, after the faeces dragging cycle and further return to the original position, a battery is connected and is being charged through a charger.

The device is applicable as well in animal areas used by private people, as kennels, shelters, canine hotels, etc.

Thanks to this device, the sanitization of the area where the animals are located is achieved automatically and not manually, preventing the contagion by infections due to lack of hygiene.

Unless stated otherwise, all the technical and scientific elements used in this specification possess the meaning usually understood by a normal person skilled in the art to which this invention pertains. In the practice of this invention, proceedings and material similar or equivalent to those disclosed can be used.

Along the description and the claims, the word "comprise" and its variants does not intend to exclude other technical characteristics, additives, components or steps. For the person skilled in the art, other objects, advantages and characteristics of the invention shall be deduced in part from the description and in part from the practice of the invention.

### EXPLANATION OF THE FIGURES

To complement the description that is being carried out and in order to assist to best understanding the characteristics of the invention, according to a preferred embodiment thereof, as integral part of the said description, a set of drawings is attached in which, for illustration and not limitation purpose, the following has been represented.

In the figure 1, a representation can be observed of a side view of the device.

In the figure 2, a front view of the device has been represented.

In the figure 3, a plan view of the device is shown.

### PREFERRED EMBODIMENT OF THE INVENTION

In view of the figures, a preferred embodiment of the proposed invention is described below.

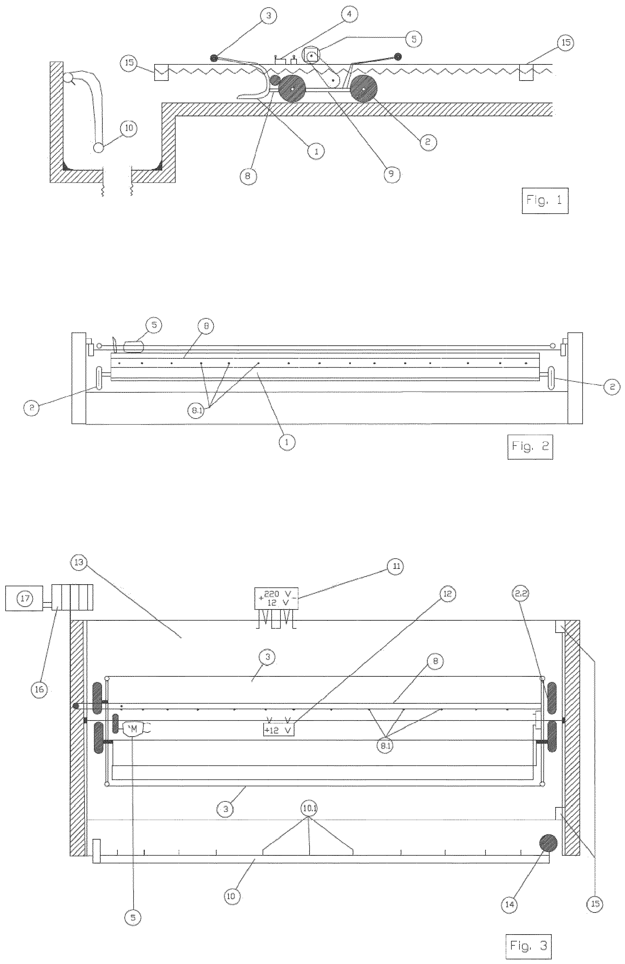

In the figures 1 to 3, it can be seen that the device for cleaning and emptying faeces from animal areas comprises a movable mobile unit provided with a shovel (1) wherein the travel by action of a motor (5), wherein the shovel (1) is half- round shaped and having a sanitizing tube (8) placed within the shovel and along its length, this sanitizing tube (8) being provided with a series of perforations (8.1) along its length, that serve to project jets of water that makes that the faeces fall to a channel or drain.

The movable mobile unit provided with the shovel (1) in addition comprises:
- A support structure (9)
- Wheels (2) mounted on the said support structure
- The motor (5) driving the wheels (2)

The device possesses means for the control and safety in its travel, that in the embodiment shown would be end strokes (15), in addition they possess photocells (3) that are arranged as well on the front part as on the back of the movable mobile unit in order to detect possible hindrances or animals and, if fit, proceed to stop the movable mobile unit travel.

Starting the motor can be carried out by means of a switch (4). The motor is powered from a battery (12) that, in turn, is charged from a charger (11).

The movable mobile unit ends its travel in front of a channel or drain that is provided with a sanitizing tube (10) of the drain that possesses a series of holes (10.1) so that, the faeces being dump on the channel or drain by means of the jets of water projected from the holes (10.1) of the sanitizing tube (10), the faeces are pushed towards a sink (14) that the channel or drain possesses.

This way, the movable mobile unit proceeds to cleaning the pavement (13) where it is mounted.

In addition, the assembly can possess a hose (16) connected to a deposit that stores a disinfecting product (17), which will allow the projection of the said product within the closed area.

Sufficiently disclosed the nature of this invention, as well as the manner of implementing it, it is put on the record that within its essentiality, it can be implemented in other forms of embodiment that differ in detail of that stated in the title of the example and which shall also be covered by the protection asked for, provided that they do not alter, change or modify its main principle.

## Claims

1. - Device for cleaning and emptying faeces from animal areas **characterized in that** it comprises a movable mobile unit provided with a shovel (1) wherein the travel by the action of a motor (5), wherein the shovel (1) is half- round shaped and with a sanitizing tube (8) placed within the shovel and along its length, this sanitizing tube (8) provided with a series of perforations (8.1) along its length, that serve to project jets of water that make that the faeces fall to a channel or drain, where the device possesses means of control and safety in its travel.

2. - Device for cleaning and emptying faeces from animal areas according to the claim 1 **characterized in that** the movable mobile unit provided with the shovel (1) includes in addition:
- A support structure (9)
- Wheels (2) mounted on the said support structure (9),
- The motor (5) driving the wheels (2)

3. Device for cleaning and emptying faeces from animal areas according to the claim 1 or 2 **characterized in that** the means for the control and safety of its travel, that in the embodiment shown are end strokes (15) and photocells that are arranged as well on the front part as on the back of the movable mobile unit in order to detect possible hindrances or animals.

4. Device for cleaning and emptying faeces from animal areas according to the claim 1 or 2 or 3 **characterized in that** starting the motor is carried out by means of a switch (4) and the motor (5) is powered from a battery (12) that in turn is charged from a charger (11).

5. Device for cleaning and emptying faeces from animal areas according to any of the preceding claims **characterized in that** the travels of the mobile unit are previously programmed from a remote device.

6. - Set for sanitizing closed areas that possesses devices for cleaning and emptying faeces according to any of the claims 1 to 5, **characterized in that** the movable mobile unit ends its travel in front of a channel or drain that is provided with a sanitizing tube (10) of the drain that possesses a series of holes (10.1) so that, the faeces being dumped on the channel or drain by means of the jets of water projected from the holes (10.1) of the sanitizing tube (10), are pushed towards a sink (14) that the channel or drain possesses.

7. - Set for sanitizing closed areas according to claim 6, **characterized in that**, in addition, the set possesses a hose (16) connected to a deposit that store a disinfectant product (17).
